# EUROPÄISCHE PATENTSCHRIFT

(11) **EP 0 941 657 B1**
(45) Veröffentlichungstag und Bekanntmachung des Hinweises auf die Patenterteilung: **19.09.2001**
(21) Anmeldenummer: 99250065.2
(22) Anmeldetag: 05.03.1999
(51) Int. Cl.: A01K 27/00

(54) **Leineneinrichtung für eine auf- und abrollbare Leine zum Führen von Tieren**
Leash device for a retractable leash for walking animals
Dispositif à laisse pour laisse rétractable pour sortir des animaux

(30) Priorität: 09.03.1998 DE 29804615 U
(43) Veröffentlichungstag der Anmeldung: 15.09.1999
(73) Patentinhaber: Flexi-Bogdahn Technik GmbH & Co. KG., 22941 Bargteheide (DE)
(72) Erfinder: Bogdahn, Manfred, 22397 Hamburg (DE)
(74) Vertreter: Jaeschke, Rainer, Dipl.-Ing.

(56) Entgegenhaltungen:
- DE-U- 7 828 193

## Beschreibung

Die Erfindung betrifft eine Leineneinrichtung für eine auf- und abrollbare Leine zum Führen von Tieren, insbesondere Hunden, und umfaßt ein von Hand tragbares Gehäuse, in dem die Leine angeordnet ist, eine Bremstaste zum Arretieren eines Leinenabschnitts in gewünschter Länge und eine Bremstasten-Verriegelung mit einem an der Bremstaste angreifenden Schwenkelement, wobei die Verriegelung in Zugriffsrichtung hinter der Bremstaste sowie separat von dieser angeordnet ist und Bremstaste und Verriegelung von derselben Hand betätigbar sind. Es handelt sich um sogenannte Rolleinen mit einer automatischen Aufrolleinrichtung.

Bei einer bekannten gattungsgemäßen Leine (DE-U 78 28 193) ist die als Arretierungsklinke ausgebildete Bremstasten-Verriegelung von einer Bedienperson aus gesehen hinter der Bremstaste, d.h. zwischen dieser und einer Durchtrittsöffnung am Gehäuse für die Leine angeordnet. Zwar ist sowohl die Bremstaste als auch die Bremstasten-Verriegelung mit der das Gehäuse haltenden Hand betätigbar. Insbesondere ist es aber nachteilig, daß die Bremstasten-Verriegelung zur Arretierung der gedrückten Bremstaste zu dieser hin, also gegen die Zugriffsrichtung, d.h. zum Handballen der Bedienungshand hin, zu bewegen ist. Die dadurch unterschiedlichen Bewegungsrichtungen oder -arten der zu betätigenden Elemente - Drücken der Bremstaste einerseits und Ziehen der Bremstasten-Verriegelung andererseits - können beim Benutzer zu Irritationen über die Funktion der Betätigungselemente führen und behindern die Handhabung mit einer Hand, und zwar insbesondere allein mit dem Daumen einer Hand. Die Handhabung wird auch dadurch erschwert, daß das Verriegelungs-Bedienelement versenkt hinter der Bremstaste zu liegen kommt. Zudem hat es sich als unbefriedigend herausgestellt, die Verriegelung der Bremstaste durch deren Betätigung zu lösen, da so auch leicht bei versehentlicher Betätigung eine Entriegelung erfolgen kann. Der fertigungstechnische Aufwand zur Bildung dieser bekannten Arretierungsklinke ist aufgrund einer besonderen Hinterschneidung für eine Klinkennase und der Art und Weise der Lagerung der Arretierungsklinke selbst relativ groß.

Bei einer anderen bekannten Leineneinrichtung mit getrennter Anordnung von Bremstaste und Bremstasten-Verriegelung sind die Betätigungselemente in für die Handergonomie ungünstigen Bereichen des Gehäuses getrennt voneinander plaziert (DE-U 84 10 346). Dies führt häufig zu Fehlbedienungen und -abläufen, und zwar insbesondere in Situationen, in denen eine einwandfreie und schnelle Bedienung erforderlich ist. Deshalb muß dann für eine sichere Bedienung die zweite Hand hinzugenommen werden, wodurch die Handhabung erschwert und schnelles Handeln verhindert werden. Nach DE-U 93 04 693 (entsprechend US 5,483,926) ist eine Leineneinrichtung bekannt, mit der eine einhändige Handhabung verbessert werden soll. Dies soll durch die Anordnung von zwei seitlichen Bedienelementen erreicht werden, jedoch ist die Betätigung beim Wechsel zwischen den Funktionszuständen dennoch beeinträchtigt. Zudem ist der Mechanismus dieser Einrichtung mit einer relativ großen Zahl von Einzelteilen konstruktiv sehr aufwendig.

Der Erfindung liegt die Aufgabe zugrunde, eine verbesserte Leineneinrichtung mit zur Bremstaste separat angeordneter Bremstasten-Verriegelung zu schaffen, die bequem und bedienungssicher mit einer Hand handhabbar, im Aufbau einfach und kostengünstig herstellbar ist.

Die Aufgabe wird erfindungsgemäß in Verbindung mit den Merkmalen der eingangs genannten Einrichtung dadurch gelöst, daß das Schwenkelement der Bremstasten-Verriegelung ein drehschwenkbar am Gehäuse gelagerter zweiarmiger Schwenkhebel ist, wobei dem ersten Arm das Bedienelement und dem zweiten Arm ein zum Angriff an der Bremstaste bestimmtes Rastelement zugeordnet ist und wobei durch Verschwenken des ersten Schwenkarms von der Bremstaste weg das Rastelement zum dauerhaften Arretieren der Bremstaste mit einer Rastaufnahme derselben verrastbar und durch Verschwenken des ersten Schwenkarms in entgegengesetzter Richtung aus dieser Rastposition ausrastbar ist. Mit der erfindungsgemäßen Anordnung ist das Verriegelungs-Bedienelement unmittelbar im Zugriffsbereich der Bremstaste derart vorgesehen, daß es zusammen mit dieser in einem quasi einheitlichen Betätigungsablauf bedient werden kann, und zwar einhändig. Dabei wird zunächst mit ein und demselben Finger, normalerweise dem Daumen, die Bremstaste gedrückt und dann das Verriegelungs-Bedienelement durch natürliche Fortsetzung der Fingerbewegung, nämlich durch Vorschieben des Fingers bzw. Daumens in Richtung zur Vorderseite der Einrichtung hin, bewegt. So wird der Zustand der Bremstaste dauerhaft verriegelt. In dieser Position, in der das Verriegelungs-Bedienelement im Zugriffsbereich des Fingers bzw. Daumens bleibt, muß es gezielt gegen die Vorschieberichtung des Fingers zurückbewegt werden, um die Bremstaste wieder freizugeben. Dadurch ist eine reaktionsschnelle und sichere Bedienung ohne Irritation über die Verriegelungs-Bedienelementfunktion einerseits und die Bremstastenfunktion andererseits gewährleistet. Der doppelarmige Verriegelungs-Schwenkhebel erlaubt eine einfach ausfiihrbare Rastverbindung mit der Bremstaste, so daß ein weniger Bauteile als bisher aufweisendes sowie kostengünstig und herstellungstechnisch einfach bauendes Verriegelungssystem erreicht ist, das andererseits durchaus auf herkömmlichen Bau- und Funktionsteilen aufbaut. So wird u.a. die Bremstaste in ihrem Inneren mit einer Druckfeder versehen, durch die sie entgegen ihrer Betätigungsrichtung kraftbeaufschlagt ist.

In besonders vorteilhafter Gestaltung der Erfindung ist der Schwenkhebel im Bereich des Rastelements mit einem Steg zur Abstützung bzw. Festlegung des Schwenkhebels am Gehäuse in der eingerasteten und/oder ausgerasteten Position verbunden. Dadurch werden die Rastpositionen zusätzlich gesichert, und das Bedienungsempfinden ist durch Arbeiten gegen gezielt definierte Rastwiderstände verbessert. Zweckmäßig kann der Steg als ein ein federndes Stützelement bildender Federsteg ausgebildet sein, der gegen elastische Rückstellkraft arbeitet. In zweckmäßiger Ausgestaltung kann dem Steg eine am Leinengehäuse ausgebildete Rastschwelle zugeordnet sein, die recht einfach ausgebildet werden kann, um mit dem freien Ende des Stegs zusammenzuwirken. Vorteilhaft besteht der Federsteg wie auch der gesamte Schwenkhebel aus Kunststoff.

Eine vorteilhafte Ausgestaltung besteht darin, daß die Wirklängen der beiden Hebelarme wenigstens im wesentlichen gleich sind. Damit erreicht man nicht nur eine besonders günstige Anordnungsposition des Hebels in unmittelbarer Nähe der Bremstaste, sondern der Schwenk-Betätigungsweg des Verriegelung-Bedienelements kann relativ klein sein, ohne die Eingriffswirkung des Rastelements an der Bremstaste zu beeinträchtigen.

Zweckmäßig kann das Verriegelungs-Bedienelement durch einen im Profilquerschnitt keilförmigen Kopf gebildet sein, dessen in Zugriffsrichtung vordere Betätigungsfläche bei sich in Bremsposition befindender niedergedrückter Bremstaste über die Betätigungsfläche der Bremstaste hervorragt. Dadurch werden Bedienkomfort und -sicherheit weiter verbessert. Insbesondere kann der Daumen der Bedienungshand beim Vorschieben gegen die Vorderfläche des Bedienkopfes auf der Betätigungsfläche der Bremstaste liegen bleiben. Der an der Oberseite des Leinengehäuses hervorstehende Bedienkopf wird durch die Bedienungshand deutlich gespürt, so daß allein infolge der Hand- bzw. Fingerberührung der Betriebszustand der Leineneinrichtung wahrgenommen werden kann. Zudem bieten die Vorderfläche des Bedienkopfes und dessen der Bremstaste abgewandte Rückfläche ergonomisch besonders günstig gelegene und ausgerichtete Betätigungsflächen.

Eine andere vorteilhafte Ausgestaltung der Erfindung besteht darin, daß die Bremstaste in mit dem Schwenkhebel nicht verrastetem Zustand gleitbewegbar an wenigstens einem Hebelarm anliegt. Dadurch kann mittels einfacher Anordnung der Schwenkhebel in Drück- und/oder Ziehrichtung spielfrei an der Bremstaste festgelegt werden. Zudem kann die Schwenkbewegung des Hebels zur Ver-/Entriegelung des Rastelements an der Bremstaste optimal reduziert werden.

Gemäß weiterer zweckmäßiger Ausgestaltung der Erfindung ist die Rastaufnahme der Bremstaste an der dem Hebel zugewandten Seite im unteren Bereich der - wie dargelegt federbeaufschlagten - Bremstaste ausgebildet. Insbesondere erreicht man dadurch, daß der Hebel mit besonders günstiger Kraftwirkung zwischen den Arretierungselementen bei zugleich zuverlässiger und leichtgängiger Entriegelbarkeit an der Bremstaste angreift. Ebenfalls ist eine raumnahe Anordnung des Hebels an der Bremstaste begünstigt, und die Schwenk-/Drehbewegung des Hebels kann besonders klein gehalten werden.

Weitere besonders bevorzugte Ausgestaltungen der Erfindung ergeben sich aus den Unteransprüchen und der Beschreibung. Nachfolgend wird ein Ausführungsbeispiel der erfindungsgemäßen Leineneinrichtung anhand der Zeichnung näher erläutert. In der Zeichnung zeigen
- Fig. 1: in Seitenansicht eine erfindungsgemäße Leineneinrichtung mit auf- und abrollbarer Leine,
- Fig. 2: im Vertikalschnitt einen die Bremstasten-Verriegelung mit entsicherter Bremstaste darstellenden Teilbereich der Leineneinrichtung gemäß Fig. 1,
- Fig. 3: im Vertikalschnitt denselben Teilbereich wie in Fig. 2, jedoch mit gedrückter und gesicherter Bremstaste, und
- Fig. 4: in Draufsicht die Bedienelemente in unbetätigtem Zustand gemäß Fig. 2.

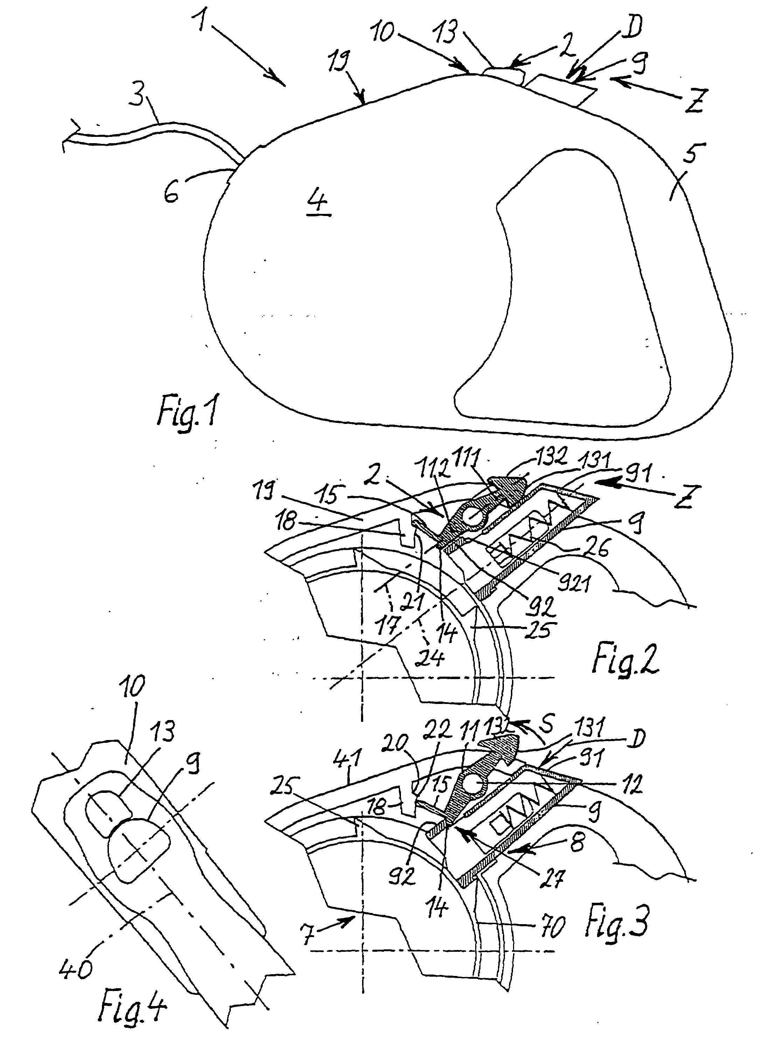

Die in Fig. 1 gezeigte Leineneinrichtung 1 weist ein Gehäuse 4 mit einem integralen Griff 5 im hinteren Bereich der Einrichtung 1 auf. Ein auszuführender Hund wird mit einer aus einer Austrittsöffnung 6 an der Einrichtungsvorderseite austretenden Leine 3 verbunden. Einer die Leine 3 aufnehmenden, nur teilweise dargestellten Rollvorrichtung 7 ist eine Bremseinrichtung 8 zugeordnet. Diese umfaßt eine gegen Federkraft drückbare Bremstaste 9, die an der Oberseite 10 des Gehäuses 4 schräg nach hinten gerichtet aus diesem herausragt. In an sich bekannter Weise wirkt die Bremstaste 9 mit einem Klinkenrad 70 der Leinenrolle zusammen, wobei das untere Ende der stabartigen Bremstaste 9 im nach unten gedrückten Zustand (Fig. 3) in den Bewegungsweg von Bremszähnen 25 des Klinkenrades 70 eingreift und das Leinenabrollen sperrt. Außerhalb des Eingriffes (Fig. 2) kann die Leine 3 von der Leinenrolle abgerollt werden. Dieses Drehen der Leinenrolle erfolgt gegen Federkraft, so daß gleichermaßen ein selbsttätiges Leinenaufrollen möglich ist, wie dies im Stand der Technik für sich hinreichend bekannt ist.

Eine Bremstasten-Verriegelung 2 ist in unmittelbarer Nähe zur Bremstaste 9 angeordnet. In Richtung Z des Daumen-/Fingerzugriffs, d.h. von dem Griff 5 bzw. von einer nicht dargestellten Bedienungsperson aus gesehen, ist die Bremstaste-Verriegelung 2 hinter der Bremstaste 9 angeordnet, also zwischen Bremstaste 9 und Austrittsöffnung 6.

Die Bremstasten-Verriegelung 2 umfaßt einen zweiarmigen Schwenkhebel 11, der drehschwenkbar innerhalb des Gehäuses 4 gelagert ist. Zu diesem Zweck ist der Schwenkhebel 11 auf einem die Drehachse bildenden, senkrecht zur Gehäusehauptebene 40 angeordneten Zapfen 12 am Gehäuse 4 gelagert, der zweckmäßig einstückig mit einer Gehäusehälfte 41 ausgebildet ist. Die beiden Schwenkarme 111, 112 gehen von der Hebeldrehachse aus und erstrecken sich in im wesentlichen gerader Linie, wobei sie die im wesentlichen gleiche Länge aufweisen. Das freie Ende des ersten Arms 111 weist ein Verriegelungsbedienelement 13 auf. Das freie Ende des anderen (zweiten) Hebelarms 112 ist mit einer einen Vorsprung bildenden runden Kante versehen, die als Rastelement 14 zum Eingriff in eine an der Bremstaste 9 ausgebildete Rastaufnahme 27 vorgesehen ist.

Das Bedienelement 13 ist durch einen im Profilquerschnitt keilförmigen Kopf gebildet, der als Betätigungsknopf dient. Bei jedem Betätigungszustand ragt das Bedienelement 13 an der Gehäuseoberseite 10 hervor. Eine besonders vorteilhafte Gestaltung besteht - wie aus Fig. 1 und 2 ersichtlich - darin, daß die in Zugriffsrichtung Z hintere Betätigungsfläche 132 bei nicht betätigtem Zustand von Bremstaste 9 und Verriegelung 2 im wesentlichen in der gleichen Höhe wie die Betätigungsfläche 91 der Bremstaste 9 liegt, während in diesem Funktionszustand die vordere Betätigungsfläche 131 des Bedienelements 13 verdeckt hinter der Bremstaste 9 bleibt. Die Bedienungs-/Betätigungsoberflächen 91 und 132 sind in diesem Zustand also in etwa bündig. Wie aus Fig. 3 ersichtlich, gelangt die vordere Betätigungsfläche 131 bei sich in Bremsposition befindender niedergedrückter Bremstaste 9 in eine Position, in der sie über die Betätigungsfläche 91 der Bremstaste 9 hervorragt.

Das freie Ende des Arms 112 ist an der der Bremstaste 9 abgewandten Hebelrückseite mit einem ein Stütz- und Rastelement bildenden Federsteg 15 einstückig verbunden. Der Federsteg 15 steht senkrecht von der Hebelrückseite ab. An dem Gehäuse 4 ist im Bereich des freien Endes des Federsteges 15 eine Rippe oder ein Vorsprung 18 ausgebildet, der einstückig mit der Gehäusewand 19 verbunden und von dieser ausgehend nach innen gerichtet ist. Er ist mit einer erhabenen Rastschwelle 22 versehen, die mit dem freien Ende des Stegs 15 zusammenwirkt. Die Rastschwelle 22 geht auf der dem Schwenkhebel 11 zugewandten Seite in Vertiefungen oder Mulden 20, 21 über, in die das federnde freie Ende des Stegs 15 wahlweise einrasten kann.

Wie bereits erwähnt, ist die Leineneinrichtung 1 in Fig. 2 mit entsicherter Bremstasten-Verriegelung 2 dargestellt. In diesem Leinen-Freilaufzustand befinden sich die Bremstaste 9 und der Schwenkhebel 11 derart in Parallelposition, daß die Mittelachse 17 des Schwenkhebels 11 parallel zur Mittelachse 24 der Bremstaste 9 verläuft. Die Bremstaste 9 liegt mit ihrer dem Hebel 11 zugewandten Seite gleitbewegbar einerseits an dem Bedienelement 13 und andererseits mit einem zu dem zweiten Arm 112 hin hervorstehenden Wandelement 92 an dem Arm 112 mit ebener Gleitfläche an. In Fig. 2 befindet sich die Bremstaste 9 außer Eingriff mit den Bremszähnen 25 der Rollvorrichtung 7. Der Federsteg 15 ist in die obere Vertiefung 20 des Vorsprungs 18 eingerastet, so daß der Schwenkhebel 11 in dieser Position am Gehäuse 4 abgestützt und in einem besonders definierten Rastzustand gehalten ist.

Um die Leine 3 nach Wunsch und/oder bei bestimmter Auslauflänge zu arretieren, wird die Bremstaste 9 betätigt. Dabei wird sie gegen die Kraft einer am Gehäuse 4 festgelegten und in ihr aufgenommenen Rückstellfeder 26 in Richtung D gegen die Rollvorrichtung 7 gedrückt, so daß das weitere Abrollen der Leine 3 durch Anliegen des unteren Endes der Bremstaste 9 gegen eine entsprechende Bremsfläche eines der Bremszähne 25 gestoppt wird. Da die Bremstaste 9 gegen die Richtung D bei entsprechender Reduzierung des Daumendrucks rückbewegbar bleibt, ist bei ausreichender Rückbewegung ein Aufrollen der Leine 3 sowie auch das weitere Ausziehen derselben möglich.

In manchen Situationen ist jedoch ein Dauerstoppzustand gewünscht, bei dem die Leine 3 in gewünschter Auslauflänge arretiert sein soll, ohne daß die Bremstaste 9 durch Daumen-/Fingerkraft gedrückt gehalten werden muß. Zu diesem Zweck ist bei gedrückter Bremstaste 9 durch Verschwenken des Schwenkhebels 11 in Richtung S von der Bremstaste 9 weg das Rastelement 14 in die durch eine Ausnehmung der Bremstaste 9 gebildete Rastaufnahme 27 auf der dem Schwenkhebel 11 zugewandten Seite einrastbar (Fig. 3). In dieser gesicherten Position der Bremstaste 9 liegt die Betätigungsoberfläche 91 der Bremstaste 9 im wesentlichen bündig mit der Oberseite 10 der Gehäusewand 19. Der Federsteg 15 ist in die untere Vertiefung 21 des Vorsprungs 18 eingerastet und stützt den Schwenkhebel 11 in dieser Position am Gehäuse 4 ab. Die Erhebung bzw. Rastschwelle 22 bewirkt in Abstimmung mit der Federkraft des Stegs 15 eine definierte Schaltschwelle zwischen den beiden Schaltzuständen der Fig. 2 und 3. Die elastische Spreiz-/Federkraft des Stegs 15 läßt sich einfach durch Materialwahl und/oder Steglänge bestimmen. Zum Lösen der Bremse 8 bzw. der Bremstasten-Verriegelung 2 ist der Schwenkhebel 11 in entgegengesetzte Richtung S zur Bremstaste 9 hin schwenkbar.

Die Rastaufnahme 27 der Bremstaste 9 ist an der dem Arm 112 zugewandten Seite im unteren, in die Rolleneinrichtung 7 eingreifenden Bereich der Bremstaste 9 ausgebildet. Dabei wird - wie in Fig. 2 und 3 dargestellt - zweckmäßig der nach oben freie Rand 921 des hervorstehenden bzw. verdickten Wandelements 92 genutzt, um den Rastanschlag der Rastaufnahme 27 für die Rundkante 14 des freien Armendes zu bilden.

Erfindungsgemäß sind die Betätigungselemente ergonomisch so angeordnet, daß eine einhändige Bedienung insbesondere mit einem Finger (Daumen) möglich ist. Durch die zur Gehäusehauptebene 40 (Fig. 4) symmetrische Anordnung der Bedienelemente an der Oberseite 10 des Gehäuses 4 wird erreicht, daß die Leineneinrichtung 1 sowohl mit der rechten als auch mit der linken Hand gleichermaßen betätigt werden kann.

## Patentansprüche

1. Leineneinrichtung (1) für eine auf- und abrollbare Leine (3) zum Führen von Tieren, umfassend ein von Hand tragbares Gehäuse (4), in dem die Leine (3) angeordnet ist, eine Bremstaste (9) zum Arretieren eines Leinenabschnitts in gewünschter Länge und eine Bremstasten-Verriegelung (2) mit einem an der Bremstaste (9) angreifenden Schwenkelement, wobei die Verriegelung (2) in Zugriffsrichtung (Z) hinter der Bremstaste (9) sowie separat von dieser angeordnet ist und Bremstaste (9) und Verriegelung (2) von derselben Hand betätigbar sind, **dadurch gekennzeichnet, daß** das Schwenkelement der Bremstasten-Verriegelung (2) ein drehschwenkbar am Gehäuse (4) gelagerter zweiarmiger Schwenkhebel (11) ist, wobei dem ersten Arm (111) das Bedienelement (13) und dem zweiten Arm (112) ein zum Angriff an der Bremstaste (9) bestimmtes Rastelement (14) zugeordnet ist und wobei durch Verschwenken (S) des ersten Schwenkarms (111) von der Bremstaste (9) weg das Rastelement (14) zum dauerhaften Arretieren der Bremstaste (9) mit einer Rastaufnahme (27) derselben verrastbar und durch Verschwenken des ersten Schwenkarms (111) in entgegengesetzter Richtung aus dieser Rastposition ausrastbar ist.

2. Leineneinrichtung nach Anspruch 1, **dadurch gekennzeichnet, daß** der Schwenkhebel (11) mit einem Steg (15) zur Festlegung des Schwenkhebels (11) am Gehäuse (4) in der eingerasteten und/oder ausgerasteten Position des Rastelements (14) verbunden ist.

3. Leineneinrichtung nach Anspruch 2, **dadurch gekennzeichnet, daß** der Steg (15) als ein federndes Stützelement bildender Federsteg ausgebildet ist.

4. Leineneinrichtung nach Anspruch 2 oder 3, **dadurch gekennzeichnet, daß** der Steg (15) an dem zweiten Hebelarm (112) im Bereich des freien Hebelarmendes angeordnet ist und wenigstens nahezu im rechten Winkel auf der der Bremstaste (9) abgewandten Seite des zweiten Hebelarms (112) von diesem absteht.

5. Leineneinrichtung nach einem der Ansprüche 2 bis 4, **dadurch gekennzeichnet, daß** der Steg (15) einstückig mit dem zweiten Schwenkarm (112) ausgebildet ist.

6. Leineneinrichtung nach einem der Ansprüche 2 bis 5, **dadurch gekennzeichnet, daß** der Steg (15) an einem stegartigen Gehäusevorsprung (18) abstützbar ist.

7. Leineneinrichtung nach einem der Ansprüche 2 bis 6, **dadurch gekennzeichnet, daß** dem freien Ende des Stegs (15) eine an dem Gehäuse (4) ausgebildete Rastschwelle (22) zugeordnet ist.

8. Leineneinrichtung nach einem der Ansprüche 1 bis 7, **dadurch gekennzeichnet, daß** die Bremstaste (9) entgegen ihrer Betätigungsrichtung (D) kraft-, insbesondere federkraftbeaufschlagt ist.

9. Leineneinrichtung nach einem der Ansprüche 1 bis 8, **dadurch gekennzeichnet, daß** die Wirklängen der beiden Arme (111, 112) des Schwenkhebels (11) in bezug auf den diesen drehschwenkbar lagernden Gehäusezapfen (12) wenigstens nahezu gleich sind.

10. Leineneinrichtung nach einem der Ansprüche 1 bis 9, **dadurch gekennzeichnet, daß** sich der Hebel (11) mit seinen beiden Armen (111, 112) in im wesentlichen gerader Linie erstreckt.

11. Leineneinrichtung nach einem der Ansprüche 1 bis 10, **dadurch gekennzeichnet, daß** das Rastelement (14) durch das freie Ende des zweiten Hebelarms (112) gebildet ist.

12. Leineneinrichtung nach Anspruch 11, **dadurch gekennzeichnet, daß** das Rastelement (14) in Form einer runden Kante des zweiten Hebelarms (112) ausgebildet ist.

13. Leineneinrichtung nach einem der Ansprüche 1 bis 12, **dadurch gekennzeichnet, daß** das Verriegelungs-Bedienelement (13) durch einen im Profilquerschnitt keilförmigen Kopf gebildet ist, dessen in Zugriffsrichtung (Z) vordere Betätigungsfläche (131) bei in Bremsposition sich befindender niedergedrückter Bremstaste (9) über die Betätigungsfläche (91) der Bremstaste (9) hervorragt.

14. Leineneinrichtung nach einem der Ansprüche 1 bis 13, **dadurch gekennzeichnet, daß** die Bremstaste (9) in mit dem Schwenkhebel (11) nicht verrastetem Zustand gleitbewegbar an wenigstens einem Hebelarm (111, 112) anliegt.

15. Leineneinrichtung nach einem der Ansprüche 1 bis 14, **dadurch gekennzeichnet, daß** die Rastaufnahme (27) der Bremstaste (9) an der dem Hebel (11) zugewandten Seite im unteren Bereich der Bremstaste (9) ausgebildet ist.

## Claims

1. A leash device (1) for a retractable leash (3) for walking animals, comprising a portable housing (4) in which the leash (3) is disposed, a braking button (9) for arresting a leash portion at a desired length and a braking button locking device (2) with a swivel element acting on the braking button (9), wherein the locking device (2) is disposed in the direction of access (Z) behind the braking button (9) and also separately therefrom and braking button (9) and locking device (2) can be operated by the same hand,
**characterised in that** the swivel element of the braking button locking device (2) is a two-armed swivel lever(11) mounted to swivel on the housing (4), wherein the operating element (13) is associated with the first arm (111) and a locking element (14) intended to act on the braking button (9) is associated with the second arm (112), and wherein by swivelling (S) the first swivel arm (111) away from the braking button (9), for the continuous arresting of the braking button (9), the locking element (14) can be locked with a locking seat (27) thereof and by swivelling the first swivel arm (111) in the opposite direction can be disengaged from this locking position.

2. A leash device according to Claim 1,
**characterised in that** the swivel lever (11) is connected to a web (15) for fixing the swivel lever (11) on the housing (4) in the engaged and/or disengaged position of the locking element (15).

3. A leash device according to Claim 2,
**characterised in that** the web (15) is designed as a spring web forming a resilient support element.

4. A leash device according to Claim 2 or 3,
**characterised in that** the web (15) is disposed on the second lever arm (112) in the region of the free end of the lever arm and on the side of the second lever arm (112) facing away from the braking button (9) protrudes at least almost at right angles from said lever arm.

5. A leash device according to one of Claims 2 to 4,
**characterised in that** the web (15) is constructed in one piece with the second swivel arm (112).

6. A leash device according to one of Claims 2 to 5,
**characterised in that** the web (15) can be supported on a web-type housing projection (18).

7. A leash device according to one of Claims 2 to 6,
**characterised in that** a catch (22) constructed on the housing (4) is associated with the free end of the web (15).

8. A leash device according to one of Claims 1 to 7,
**characterised in that** force, in particular elastic force, acts on the braking button (9) against its operating direction (D).

9. A leash device according to one of Claims 1 to 8,
**characterised in that** the effective lengths of the two arms (111, 112) of the swivel lever (11) are at least roughly the same with respect to the housing journal (12) which carries it in a swivelling manner.

10. A leash device according to one of Claims 1 to 9,
**characterised in that** the lever (11) extends with both its arms (111, 112) in a substantially straight line.

11. A leash device according to one of Claims 1 to 10,
**characterised in that** the locking element (14) is formed by the free end of the second lever arm (112).

12. A leash device according to Claim 11,
**characterised in that** the locking element (14) is constructed in the form of a round edge of the second lever arm (112).

13. A leash device according to one of Claims 1 to 12,
**characterised in that** the locking operating element (13) is formed by a head having a wedge-shaped profile cross section, whose operating face (131) at the front in the access direction (Z) extends beyond the operating face (91) of the braking button (9) when the pressed-down braking button (9) is in the braking position.

14. A leash device according to one of Claims 1 to 13,
**characterised in that** in the state not engaged with the swivel lever (11) the braking button (9) abuts at least one lever arm (111, 112) in a slidable manner.

15. A leash device according to one of Claims 1 to 14,
**characterised in that** the locking seat (27) of the braking button (9) is constructed on the side facing the lever (11) in the lower region of the braking button (9).

## Revendications

1. Dispositif à laisse (1) pour une laisse (3) enroulable et déroulable servant à guider des animaux, comprenant un boîtier (4), portable à la main et dans lequel est logée la laisse (3), un bouton de freinage (9) pour bloquer un segment de laisse à la longueur désirée, un verrouillage (2) du bouton de freinage présentant un élément basculant agissant sur le bouton de freinage (9), ce verrouillage (2) étant situé par rapport à sa direction d'action (Z) derrière le bouton de freinage (9) et séparé de celui-ci, la même main pouvant actionner le bouton (9) et le verrouillage (2),
**caractérisé en ce que**
- l'élément basculant (2) de verrouillage du bouton de freinage est un levier basculant (11) à deux bras, monté pivotant dans le boîtier (4),
- au premier bras (111) est associé un élément de manoeuvre (13) et au second bras (112) est associé un élément d'arrêt (14) conçu pour agir sur le bouton de freinage (9),
- le basculement (S) du premier bras basculant (111) l'éloignant du bouton de freinage (9) permet de verrouiller le bras dans un logement d'arrêt (27) que présente le bouton (9), pour arrêter durablement celui-ci tandis que le basculement du premier bras (111) dans le sens opposé a pour effet de dégager le bouton de sa position d'arrêt.

2. Dispositif selon la revendication 1,
**caractérisé en ce que**
le levier basculant (11) est relié à une barrette (15) servant à assurer la fixation, sur le boîtier (4), du levier basculant (11) en position de blocage et/ou de déblocage de l'élément d'arrêt (14).

3. Dispositif selon la revendication 2,
**caractérisé en ce que**
la barrette (15) est une barrette élastique formant élément élastique de soutien.

4. Dispositif selon l'une quelconque des revendications 2 ou 3,
**caractérisé en ce que**
la barrette (15) est montée sur le second bras de levier (112) vers l'extrémité libre de celui-ci et fait saillie, au moins à peu près perpendiculairement, sur le côté du second bras de levier (112) qui est éloigné du bouton de freinage (9).

5. Dispositif selon l'une quelconque des revendications 2 à 4,
**caractérisé en ce que**
la barrette (15) est monobloc avec le second bras de levier (112).

6. Dispositif selon l'une quelconque des revendications 2 à 5,
**caractérisé en ce que**
la barrette (15) peut prendre appui sur une saillie (18) du boîtier en forme de barrette.

7. Dispositif selon l'une quelconque des revendications 2 à 6,
**caractérisé en ce qu'**
à l'extrémité libre de la barrette (15) est associé un seuil d'arrêt (22) formé sur le boîtier (4).

8. Dispositif selon l'une quelconque des revendications 1 à 7,
**caractérisé en ce que**
le bouton de freinage (9) est soumis à l'action d'une force en particulier d'une force élastique, dans le sens opposé au sens (D) d'actionnement de la touche.

9. Dispositif selon l'une quelconque des revendications 1 à 8,
**caractérisé en ce que**
les longueurs efficaces des deux bras (111, 112) du levier basculant (11) par rapport au pivot de boîtier (12) sur lequel celui-ci peut basculer, sont au moins à peu près égales.

10. Dispositif selon l'une quelconque des revendications 1 à 9,
**caractérisé en ce que**
le levier (11) a ses deux bras (111, 112) disposés sensiblement en ligne droite.

11. Dispositif selon l'une quelconque des revendications 1 à 10,
**caractérisé en ce que**
l'élément d'arrêt (14) est constitué par l'extrémité libre du second bras de levier (112).

12. Dispositif selon la revendication 11,
**caractérisé en ce que**
l'élément d'arrêt (14) est réalisé sous la forme d'un bord arrondi du second bras de levier (112).

13. Dispositif selon l'une quelconque des revendications 1 à 12,
**caractérisé en ce que**
l'élément de manoeuvre (13) du verrouillage est constitué par une tête ayant en coupe transversale la forme d'un coin et dont la portée d'actionnement (131) qui se trouve devant par rapport au sens d'actionnement (Z) fait saillie au-dessus de la portée d'actionnement (91) du bouton de freinage (9), quand celui-ci se trouve enfoncé en position de freinage.

14. Dispositif selon l'une quelconque des revendications 1 à 13,
**caractérisé en ce que**
le bouton de freinage (9) quand il n'est pas en position verrouillée par le levier basculant (11), peut coulisser le long d'au moins un bras de levier (111, 112).

15. Dispositif selon l'une quelconque des revendications 1 à 14,
**caractérisé en ce que**
le logement d'arrêt (27) du bouton de freinage (9) se trouve à la partie inférieure du bouton (9), du côté tourné vers le levier (11).
